# EUROPÄISCHE PATENTSCHRIFT

(11) **EP 2 229 267 B1**
(45) Veröffentlichungstag und Bekanntmachung des Hinweises auf die Patenterteilung: **19.12.2018**
(21) Anmeldenummer: 08865656.6
(22) Anmeldetag: 23.12.2008
(51) Int. Cl.: B29C 45/00, B29C 45/04

(54) **SPRITZGIESSVORRICHTUNG MIT EINEM DREHBAREN MITTELTEIL UND VERFAHREN**
INJECTION MOULDING DEVICE WITH A ROTATABLE CENTRAL PART AND METHOD
DISPOSITIF DE MOULAGE PAR INJECTION ET PROCEDE

(30) Priorität: 24.12.2007 CH 20332007
(43) Veröffentlichungstag der Anmeldung: 22.09.2010
(73) Patentinhaber: FOBOHA GMBH FORMENBAU, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2008/068253
(87) Internationale Veröffentlichungsnummer: WO 2009/080827

(56) Entgegenhaltungen:
- WO-A-00/12284
- WO-A-02/04186
- WO-A-2004/103676
- WO-A-2005/077637
- DE-A1-102006 016 200
- US-A- 4 427 359

## Beschreibung

Die vorliegende Erfindung liegt auf dem Gebiet des Spritzgiessens von plastifizierten Materialien, insbesondere Kunststoff.

Aus dem Stand der Technik sind Spritzgiesswerkzeuge zum Herstellen von Artikeln aus mehreren Kunststoffkomponenten oder Teilen bekannt. Neben Lösungen, die auf in einer Trennebene angeordneten Drehtellern basieren, sind auch Werkzeuge mit einem drehenden, würfelähnlichen Mittelteil bekannt.

US4734023 von Klöckner Ferromatik Desma GmbH zeigt eine Spritzgiessvorrichtung mit einem Mittelteil das zwischen zwei Aussenteilen angeordnet ist, die entlang von Holmen einer Spritzgiessmaschine gegeneinander verfahrbaren sind. Das drehbare Mittelteil ist an zwei, parallel zu den Holmen der Spritzgiessmaschine angeordneten, separaten Führungsstangen schwebend gelagert. Die Führungsstangen ragen aus einer der Formaufspannplatten der Spritzgiessmaschine hervor. Infolge der Anordnung sind nur kleine Mittelteile möglich.

US4444711 von Husky Injection Molding Systems Ltd. zeigt eine Vorrichtung zur Herstellung von Bürsten. Zwischen zwei entlang von Holmen gegeneinander verfahrbaren Aussenteilen ist ein würfelförmiger Mittelteil angeordnet, der in 90°-Schritten um eine zu dem Holmen senkrechte Drehachse gedreht wird. Die Vorrichtung ermöglicht die Herstellung von Bürsten aus einem harten und einem gummiartigen weichen Kunststoff. Durch Hinterschnitte wird die Übergabe der Teile vom ersten Aussenteil über den würfelförmigen Mittelteil zum zweiten Aussenteil bewerkstelligt.

Das Europäische Patent EP1155802 derselben Anmelderin zeigt eine Spritzgiessvorrichtung mit zwei Produktionsebenen (Trennebenen) mit einem Wendesystem, das zwischen einem feststehenden und einem beweglichen Formteil angeordnet ist und zur Halterung eines mittleren Formteils dient. Das mittlere Formteil ist durch eine untere und eine obere Traverse mittels Haltemitteln gehalten und um eine vertikale Achse drehbar angeordnet. Die Traversen sind an den Holmen einer Spritzgiessmaschine geführt. Um das Gewicht des mittleren Formteils zu kompensieren ist die untere Traverse, falls erforderlich, auf dem Maschinenbett der Spritzgiessmaschine abgestützt. Damit das mittlere Formteil ausgewechselt werden kann, sind die Haltemittel relativ zueinander verschiebbar angeordnet. In einer ersten Produktionsebene wird eine erste Materialkomponente in eine Kavität gespritzt, so dass ein erstes Teil entsteht. Das Teil aus der ersten Materialkomponente bleibt beim Öffnen der Form am mittleren Formteil haften und wird mit diesem durch Drehen des mittleren Formteils in einem 180° oder zwei 90° Schritten in die zweite Produktionsebene gebracht, wo es nach dem Schliessen der Form mit einer zweiten Materialkomponente wirkverbunden wird. Das mittlere Formteil ist über Haltevorrichtungen an den Holmen einer Spritzgiessmaschine abgestützt.

EP0895848, von der Ferromatik Milacron Maschinenbau GmbH, zeigt eine weitere Vorrichtung mit zwei Trennebenen. Zwischen einer feststehenden und einer beweglich angeordneten Formhälfte ist ein mittleres Formteil angeordnet das in einer unteren und einer oberen Traverse gelagert und auf einem Maschinenbett einer Spritzgiessvorrichtung abgestützt ist. Das Mittelteil ist um eine vertikale Achse um 180° drehbar angeordnet und weist nur auf zwei Seiten Kavitäten auf. Das Lager im Bereich der oberen Traversen kann geöffnet werden, damit das Mittelteil entnommen werden kann.

EP1119449 (fortan EP'449), von der Krauss Maffei Kunststofftechnik GmbH, zeigt eine Spritzgiessvorrichtung mit zwei Produktionsebenen, mit einer feststehenden und einer beweglichen Formhälfte. Zwischen den beiden Formhälften ist ein Formmittelteil angeordnet, das mittels einer im Maschinenbett einer Spritzgiessmaschine eingelassenen Führung einseitig gehalten und um eine Achse drehbar angeordnet ist. Die Spritzgiessmaschine ist dafür diesen besonderen Anforderungen gerecht angepasst. Die in EP'449 beschriebene Vorrichtung ist zur Herstellung von Teilen aus mehreren Kunststoffkomponenten geeignet.

US6824381B2 von Krauss Maffei zeigt eine Spritzgiessvorrichtung mit einem drehenden Mittelteil. Zwischen zwei relativ zueinander entlang von Holmen einer Spritzgiessmaschine verfahrbaren Aussenteilen ist ein um eine vertikale Achse drehbares Mittelteil angeordnet. Das Mittelteil ist auf einem auf dem Maschinenbett der Spritzgiessvorrichtung abgestützten Schlitten angeordnet. Die Führung des Mittelteils weist keine Verbindung zu dem Holmen der Spritzgiessmaschine auf.

US6709251B2 von MGS Enterprises, Inc. zeigt eine weitere Spritzgiessvorrichtung mit einem drehbaren Mittelteil, die vom Aufbau her weitgehend der vorgängig erwähnten US6824381 B2 entspricht.

WO03/049917 von Gram Technology APS beschreibt auf undeutliche Art und Weise in Form von Konzeptansätzen und ohne konkrete Lösungsvorschläge eine Art von Spritzgiessvorrichtung mit einem um eine Drehachse drehenden Mittelteil. Die Drehung soll gemäss der Ansicht des Erfinders zum Schliessen von Scharnierverschlüssen ausgenutzt werden. Infolge dessen die Scharnierverschlüsse mit der Drehung der Form geschlossen werden sollen, können diese nicht beliebig in der Trennebene angeordnet werden. Z.B. können die offenen Verschlüsse nicht parallel zur Drehachse ausgerichtet sein. Dieses Konzept ist prinzipbedingt starken Limitierungen unterworfen.

US6787094B2 von Continental PET Technologies zeigt eine Spritzgiessvorrichtung zum Herstellen von mehrschichtigen Preforms für Getränkeverpackungen. Auch hin ist ein drehbares Mittelteil zwischen zwei gegeneinander entlang von Holmen verfahrbaren Aussenteilen um eine vertikale Achse angeordnet. Der Mittelteil wird jeweils um 180° gedreht.

DE2215289 zeigt eine Spritzblasform mit einem drehenden Mittelteil, das zwischen einem feststehenden ersten und einem gegenüber diesem beweglichen zweiten Aussenteil angeordnet ist und zur Herstellung von Hohlkörpern durch Spritzblasformen dient. Die Aussenteile umgreifen die durch das Mittelteil gebildete Kerne.

JP55095544 von Japan Steel Works Ltd. zeigt eine Vorrichtung zum Montagespritzgiessen. Auf einer Spritzgiessmaschine mit zwei Einspritzstationen ist eine Spritzgiessform angeordnet. Ein erstes Formaussenteil ist feststehend und ein zweites entlang von vier Holmen verschiebbar angeordnet. Zwischen den beiden Formaussenteilen ist ein Formmittelteil um eine Achse drehbar und entlang der Holme der Spritzgiessmaschine ebenfalls verschiebbar angeordnet. In einem Winkel von 90° zur Holmenlängsrrichtung sind Sekundärverarbeitungsmaschinen angeordnet, die zum Bearbeiten von am Formmittelteil bei einer 90°-Position gehaltenen Zwischenprodukten dienen. Die Sekundärverarbeitungsmaschinen sind gegenüber der Spritzgiessmaschine stationär angeordnet, so dass nur bei stillstehendem Formmittelteil die Sekundärverarbeitungsmaschinen zum Einsatz kommen können.

GB14807 von Mardon Illingworth zeigt eine Spritzgiessvorrichtung mit einem in einer Trennebene integriertem Verdeckelungsmechanismus für Verschlüsse. Der Verdeckelungsmechanismus verschliesst den Verschluss indem der Verschlussoberteil auf einer Kreisbahn zum Verschlussunterteil hin geführt wird.

US5518387 von Husky Injection Molding Systems Ltd. zeigt eine Vorrichtung zum Entfernen von Werkstücken aus einer Spritzgiessvorrichtung. Diese beruht auf Schwenkarmen, welche bei geöffneter Spritzgiessvorrichtung von der Seite her um eine parallel zur Trennebene angeordnete Drehachse in die Trennebene eingeschwenkt werden.

US5037597 von Husky Injection Molding Systems Ltd. zeigt eine Vorrichtung zum Entladen und Zusammensetzen von Spritzgiessteilen aus einem Spritgiesswerkzeug. Mittels Greifern werden die Teile aus unterschiedlichen Trennebenen erfasst und zusammengesetzt.

US5744082 von Marland Mold Inc. offenbart eine Spritzgiessform mit einem im Bereich der Trennebene integrierten Verdeckelungsmechanismus für Scharnierverschlüsse. Der Verdeckelungsmechanismus basiert im Wesentlichen auf einem um eine Achse drehbaren Rahmen, der auf den Verschlussoberteil einwirkt.

WO0228622 von Schoettli AG zeigt eine Vorrichtung zum Schliessen von Scharnierverschlüssen in einer Spritzgiessform mit einer Vielzahl von Kavitäten. Die Vorrichtung wird bei geöffneter Spritzgiessform von der Seite her auf einem Schienensystem linear im Bereich der Trennebene zwischen die beiden Formhälften geschoben. Die einzelnen Drücker sind Kulissen gesteuert.

US4427359 von Sumitomo Heavy Industries Ltd. zeigt eine Vorrichtung zum Spritzblasformen. Die Vorrichtung umfasst eine stationäre Aufspannplatte, eine bewegbare Aufspannplatte, sowie einen dazwischen angebrachten Träger mit vier jeweils zueinander um jeweils 90° verschoben Bearbeitungsflächen. Die Vorrichtung weist zudem vier auf Rotationskörpern angebrachte Halterungen für Halsformhälften auf. Die Rotationskörper sind relativ zum Träger rotierbar, um Rohlinge zwischen den einzelnen Bearbeitungsflächen zu fördern.

Nachteile der aus dem Stand der Technik bekannten Verfahren und Vorrichtungen sind unter anderem, dass sie keine präzise Positionierung und damit effiziente Fertigung von Teilen unter Einbezug einer dritten Formhälfte ermöglichen. Nur durch ein optimales Zusammenspiel ist eine effiziente Lösung möglich.

Eine Aufgabe der Erfindung besteht darin eine Vorrichtung und ein Verfahren zu zeigen, mittels denen höher integrierte oder komplexere Teile in einer Spritzgiessvorrichtung effizient hergestellt werden können.

Eine weitere Aufgabe der Erfindung besteht darin eine Vorrichtung zu zeigen mittels der Scharnierverschlüsse mit mehreren Materialkomponenten hergestellt und vor der Entnahme geschlossen werden können, während dem in zwei weiteren Werkzeugtrennebenen weitere Teile hergestellt werden.

In einer Ausführungsform der Erfindung ist eine erfindungsgemässe Spritzgiessvorrichtung (Spritzgiessform) mit einer Spritzgiessmaschine wirkverbunden. Die Spritzgiessvorrichtung weist eine erste Formhälfte und eine, gegenüber der ersten in einer ersten Richtung linear beweglich angeordnete, zweite Formhälfte auf. Zwischen diesen ist eine, um eine Drehachse drehbare mittlere Formhälfte angeordnet. Die mindestens eine mittlere Formhälfte wirkt im Bereich einer ersten und einer zweiten Trennebene mit der ersten und einer zweiten Formhälfte zusammen. Im Bereich der ersten und/oder im Bereich der zweiten Formhälfte sind Kavitäten vorgesehen, die zur Formgebung von in diese eingebrachtes plastifiziertes Material dient. Typische Umformprozesse sind Spritzgiessen oder Blasformen von Kunststoff oder einem anderen plastifizierbaren Material. In einer weiteren Ausführungsform sind mehr als eine mittlere Formhälfte vorhanden, die in einer mittleren Trennebene miteinander oder den äusseren Formhälften zusammenwirken.

Die mittlere Formhälfte weist typischer Weise die Form eines Würfels oder Quaders auf und ist gegenüber den Holmen der Spritzgiessmaschine und/oder auf einem Maschinenbett der Spritzgiessmaschine mittels einer Haltevorrichtung beweglich gelagert. Die Haltevorrichtung dient zum Bewegen der mittleren Formhälfte entlang der Holme und zum Drehen der mittleren Formhälfte um die Drehachse. Die Haltevorrichtung umfasst zur Halterung der mittleren Formhälfte eine untere und/oder eine obere Traverse. Ein Halterahmen zur Halterung der weiteren Bearbeitungsvorrichtung ist an zumindest einer Traverse der Haltevorrichtung für die mittlere Formhälfte angebracht. Die weitere Bearbeitungsvorrichtung ist dabei am Halterahmen in mindestens einer Richtung beweglich angeordnet._Ein Linearantrieb, respektive eine Koordinationsvorrichtung bewirken, dass beim Öffnen und beim Schliessen der Formhälften die mittlere Formhälfte stets in etwa mittig zwischen den sie benachbarenden anderen Formhälften angeordnet bleibt. Mittels eines Drehantriebs wird die mittlere Formhälfte schrittweise um die Drehachse gedreht, so dass an der mittleren Formhälfte anhaftende Zwischenprodukte aus der ersten Trennebene in die zweite Trennebene gelangen.

Gemäss der Erfindung ist seitlich neben der Spritzgiessvorrichtung eine weitere, dritte Formhälfte und/oder eine Bearbeitungsvorrichtung beweglich angeordnet. Diese fährt zumindest bereichsweise mit der mittleren Formhälfte in der ersten Richtung (Richtung der Holmen) mit und dient zur Bearbeitung oder Manipulation von an der mittleren Formhälfte anhaftenden Teilen oder Zwischenprodukten, die in der ersten und/oder der zweiten Trennebene hergestellt wurden, selbst wenn das Mittelteil sich noch in Bewegung befindet. Durch das Mitfahren wird erreicht, dass die Bearbeitungszeit verkürzt und die Präzision erhöht wird, da die temporär miteinander in Wirkverbindung stehenden Bestandteile der Vorrichtung immer optimal zueinander ausgerichtet sind. Durch ein bei Bedarf mehrstufiges Zentrieren wir eine höhere Präzision erreicht. Zudem besteht die Möglichkeit, dass gewisse Bearbeitungsvorgänge schon während dem Fahren stattfinden, indem, nachdem das Mittelteil nach der Drehung zum Stillstand gekommen ist, ein Eingriff vorgenommen wird, auch wenn die Linearbewegung entlang der Holmen noch nicht zum Stillstand gekommen ist. Unter einer mehrstufigen Zentrierung wird eine Grobzentrierung durch erste Zentriermittel und eine dann erfolgende Feinzentrierung durch dieselben oder weitere Zentriermittel verstanden. Während bei einer Grobzentrierung primär die Bewegungsabläufe zumindest bereichsweise aufeinander abgestimmt werden, werden in einer Feinzentrierung die miteinander effektiv in Eingriff zu bringenden Teile präzise abgestimmt.

Gemäss der Erfindung ist die mittlere Formhälfte an einer Haltevorrichtung drehbar gelagert. Die Haltevorrichtung weist eine untere und eine obere Traverse auf, die mittels Linearlagern an den Holmen der Spritzgiessmaschine gelagert sind. Bei Bedarf ist die Haltevorrichtung zudem auf dem Maschinenbett der Spritzgiessvorrichtung abgestützt. An den Traversen angebrachte Dreheinheiten dienen zur Aufnahme der mittleren Formhälfte dazwischen. Mittels der Dreheinheiten ist die mittlere Formhälfte um ihre Drehachse drehbar. Medien werden vorzugsweise koaxial durch zumindest eine der Dreheinheiten der mittleren Formhälfte zugeführt. Indem die Traversen relativ zu einander verschiebbar sind, kann die mittlere Formhälfte einfach in die Haltevorrichtung eingesetzt und wieder aus dieser entnommen werden. Zumindest an einer der Traversen ist ein Stativ oder Halterahmen angebracht an dem eine weitere Bearbeitungsvorrichtung befestigt ist. Bei schwereren Bearbeitungsvorrichtungen können die Traversen zumindest während dem Betrieb zur besseren Verteilung der Kräfte über den die Last der Bearbeitungsvorrichtung aufnehmenden Halterahmen miteinander verbunden sein. Bei Bedarf ist der Halterahmen auf dem Maschinenbett oder ausserhalb der Spritzgiessvorrichtung auf einer dafür vorgesehenen Hilfskonstruktion abgestützt (beispielsweise ein auf dem Boden festgeschraubtes Schienensystem). Gegenüberliegende Ausgleichsgewichte sind möglich. Bei Systemen mit hoher Präzision kann eine Abstützung auf dem Boden nicht ausreichend sein.

Bei der weiteren Bearbeitungsvorrichtung kann es sich beispielsweise um eine dritte Formhälfte oder eine Verdeckelungsvorrichtung handeln, mittels der an der mittleren Formhälfte angebrachten Scharnierverschlüsse verschlossen werden. Die weitere Bearbeitungsvorrichtung ist in der Regel am Halterahmen in mindestens einer Richtung beweglich angeordnet, so dass sie gegenüber der mittleren Formhälfte in radialer und/oder tangentialer Richtung und falls erforderlich in ihrem Winkel ausgerichtet und positioniert werden kann. Handelt es sich bei der weiteren Bearbeitungsvorrichtung z.B. um eine dritte Formhälfte können entsprechende Andock- und Verankerungsmechanismen vorgesehen werden, mittels denen sich die dritte Formhälfte am der mittleren Formhälfte temporär während dem Verarbeitungsschritt kraftschlüssig verankern kann. Bei Bedarf sind spezielle Aktuatoren vorgesehen, die eine ausreichende Schliesskraft erzeugen. Die Andock- und Verankerungsmechanismen, sowie die Aktuatoren sind in der Regel mitfahrend ausgestaltet.

In einer weiteren Ausführungsform dient die Bearbeitungsvorrichtung zum Einlegen, Einsetzen oder Verankern von weiteren Teilen in eine oder mehrere Kavitäten und/oder Spritzgiessteile (Zwischenprodukte), die in einem vorangegangenen Bearbeitungsschritt hergestellt wurden. Die weiteren Teile können über ein Manipulationssystem von Aussen zugeführt werden. Ebenfalls besteht die Möglichkeit die Bearbeitungsvorrichtung zu Testzwecken zu verwenden.

Das Andocken einer dritten Formhälfte, resp. einer weiteren Bearbeitungsvorrichtung erfolgt typischer Weise wie folgt:
a) Nachdem die quaderförmige mittlere Formhälfte ihre vorgesehene Drehposition erreicht hat, wird die am Halterahmen befestigte, dritte Formhälfte/Bearbeitungsvorrichtung radial auf eine Seitenfläche der mittleren Formhälfte zu bewegt.
b) Bei Bedarf werden Zentriermittel miteinander in Eingriff gebracht, respektive Verankerungselemente kraftschlüssig miteinander verankert, derart, dass die dritte Formhälfte/Bearbeitungsvorrichtung gegenüber der Seitenfläche exakt positioniert, resp. kraftschlüssig verankert ist.
c) Bei Bedarf werden die sich im Bereich der Seitenfläche befindlichen Teile oder Zwischenprodukte relativ zur Seitenfläche bewegt, bspw. indem sie aus Kavitätenhälften heraus freigestellt werden.
d) Mittels der dritten Formhälfte, respektive der Bearbeitungsvorrichtung wird der vorgesehene Bearbeitungsschritt durchgeführt.
e) Lösen der dritten Formhälfte, respektive der Bearbeitungsvorrichtung während dem die mittlere Formhälfte stillsteht oder die Spritzgiessvorrichtung geöffnet wird. Falls erforderlich kann die Vorrichtung so ausgestaltet sein, dass die dritte Formhälfte, respektive die Bearbeitungsvorrichtung partiell mitdreht.

In einer weiteren Ausführungsform ist die mittlere Formhälfte auf einem z.B. zwischen den unteren Holmen der Spritzgiessmaschine angeordneten, auf einem Schienensystem in Richtung der Holme beweglichen Wagen gelagert. Bei Bedarf kann das Schienensystem auch ausserhalb der Holme angeordnet sein. Auf dem Wagen ist ein Drehsystem angebracht, das zur Halterung der mittleren Formhälfte dient und mittels dem die mittlere Formhälfte um eine im Wesentlichen senkrecht zu den Holmen angeordnete Drehachse drehbar ist. Bei Bedarf kann die mittlere Formhälfte mittels einer Traverse an den oberen Holmen zur Aufnahme der entstehenden Momente und/oder zur Übergabe von Medien abgestützt sein. Eine dritte Formhälfte und/oder eine Bearbeitungsvorrichtung sind seitlich in etwa auf der Höhe der mittleren Formhälfte angeordnet. Die dritte Formhälfte, resp. die Bearbeitungsvorrichtung bewegen sich während dem Öffnen und Schliessen der Spritzgiessvorrichtung zumindest Bereichsweise mit der mittleren Formhälfte entlang der Holmen mit. Dies bietet den Vorteil, dass diese Zeit genutzt werden kann. Die dritte Formhälfte, resp. die Bearbeitungsvorrichtung sind mit dem Wagen und/oder, falls vorhanden, der oberen Traverse wirkverbunden. In einer Ausführungsform sind die dritte Formhälfte, resp. die Bearbeitungsvorrichtung an einem Halterahmen gelagert, der an dem unteren Wagen vorstehend angebracht ist. Falls erforderlich kann eine Abstützung gegenüber dem Maschinenbett der Spritzgiessmaschine und/oder einem anderen Untergrund vorgesehen werden. Bei Vorrichtungen, die eine besonders hohe Präzision erfordern, kann sich dies jedoch unter Umständen nachteilig auswirken.

In einer weiteren Ausführungsform ist seitlich neben einer Spritzgiessvorrichtung ein dritte Formhälfte in seitlicher Richtung, senkrecht zu den Holmen beweglich angeordnet. Die Spritzgiessvorrichtung weist eine erste feststehende und eine entlang von Holmen bewegliche zweite Formhälfte auf. Zwischen der ersten und der zweiten Formhälfte ist mindestens eine um eine Achse drehbare zweite Formhälfte angebracht. Die dritte Formhälfte wirkt in geschlossenen Zustand der Spritzgiessvorrichtung mit einer drehbaren mittleren Formhälfte zusammen, indem sie mit den Kavitäten einer freien Seite derselben korrespondiert. Bei Bedarf sind Verankerungsmittel und/oder Zentriermittel der oben beschriebenen Art vorhanden, mittels denen die dritte Formhälfte direkt oder indirekt mit der mittleren Formhälfte wirkverbunden werden kann.

Aus dem Stand der Technik sind Verdeckelungsvorrichtungen bekannt, die in eine Trennebene einer Spritzgiessform eingebaut sind (vgl. eingangs erwähnter Stand der Technik). Dies weist den Nachteil auf, dass die Produktion durch das Schliessen der Deckel verzögert wird. Zudem weist die Verdeckelungsvorrichtung einen komplexen Aufbau auf und muss in die Spritzgiessform integriert werden. Ein weiterer Nachteil besteht darin, dass die Spritzgiessform stark modifiziert werden muss, so dass ein Nachrüsten nicht möglich ist. Zudem wird der Produktionsablauf weiter verzögert, da vor dem Verdeckein in der Regel eine zusätzliche Kühlphase erforderlich ist. Damit eine Verdeckelungsvorrichtung seitlich an einer erfindungsgemässen Spritzgiessvorrichtung zum Einsatz kommen kann, muss sie eine spezielle Kinematik aufweisen, damit die Kappen der Scharnierverschlüsse effizient geschlossen werden können. Ein Problem besteht darin, dass die Schliesselemente hinter den Kappen positioniert werden müssen, bevor diese geschlossen werden können. In einer Ausführungsform weist eine erfindungsgemässe Verdeckelungsvorrichtung eine in seitlicher Richtung, d.h. in der Regel parallel zu einer Seitenfläche der mittleren Formhälfte und relativ zu einer ersten Grundplatte verschiebbare zweite Grundplatte auf. Die zweite Grundplatte ist mittels Linearlagern gegenüber der ersten Grundplatte gelagert und mittels eines Linearantriebs gegenüber dieser verschiebbar. Auf der zweiten Grundplatte sind um eine zweite Drehachse drehbare Schliessbügel angeordnet. Die zweite Grundplatte weist Aussparungen auf, die so angeordnet sind, dass in einer ersten Position der Grundplatte auf Kernen sitzende Verschlüsse durch diese hindurch ragen können. Indem die zweite Grundplatte durch lineares Verschieben gegenüber der ersten Grundplatte in eine zweite Position gebracht wird, werden die Schliessbügel hinter den Kappen der Verschlüsse positioniert, so dass durch Drehen der Schliessbügel um die zweiten Drehachsen die Kappen geschlossen werden.

Die beschriebene Vorrichtung kann in analoger Weise auch für Spritzgiessvorrichtungen mit mehreren drehenden Mittelteilen verwendet werden. Die Mittelteile können hinter- oder seitlich nebeneinander angeordnet sein. Ebenso besteht die Möglichkeit, dass das Mittelteil um eine horizontale oder vertikale Achse dreht.

Eine besondere Ausführung der Erfindung ist in Patentanspruch 7 angegeben.

Anhand der nachfolgenden Figuren werden Ausführungsbeispiele der Erfindung beschrieben. Es zeigen:
- Fig. 1: eine erste Ausführungsform einer Spritzgiessvorrichtung in von schräg oben;
- Fig. 2: die Spritzgiessvorrichtung gemäss Figur 1 von der Seite;
- Fig. 3: die Spritzgiessvorrichtung gemäss Figur 1 von vorne;
- Fig. 4: Detail A aus Figur 3;
- Fig. 5: Eine Verdeckelungsvorrichtung in einer perspektivischen Ansicht von schräg oben;
- Fig. 6: Detail B aus Figur 5;
- Fig. 7: Detail C aus Figur 5;
- Fig. 8: Die Verdeckelungsvorrichtung von oben.

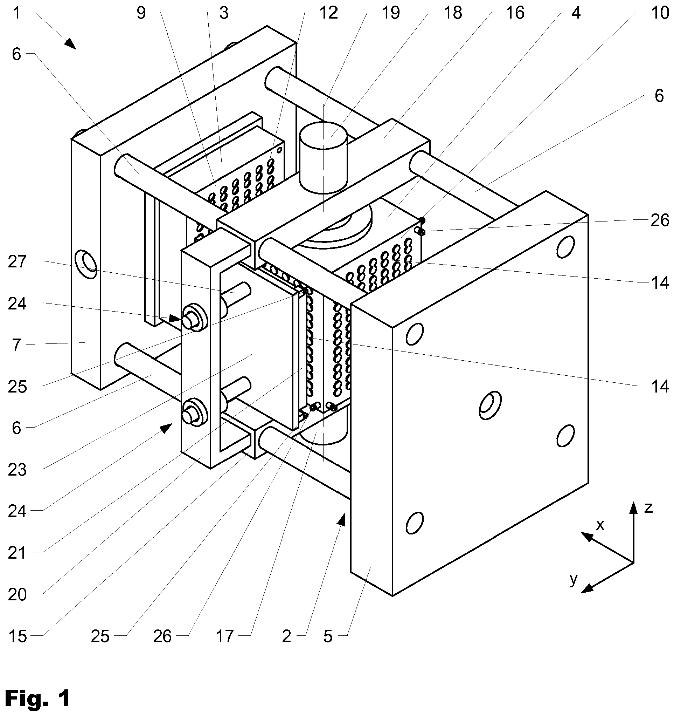

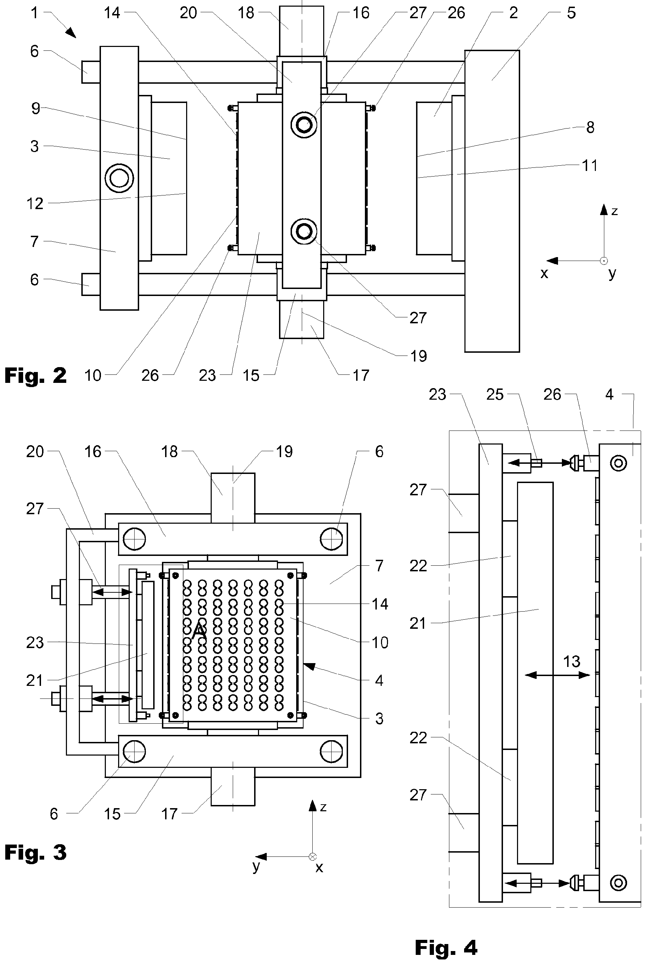

**Figur 1** zeigt eine Spritzgiessvorrichtung 1 in einer perspektivischen Ansicht von schräg oben. Die Spritzgiessvorrichtung ist geöffnet dargestellt. **Figur 2** zeigt die Spritzgiessvorrichtung 1 gemäss Figur 1 in einer Seitenansicht und **Figur 3** in einer Vorderansicht. In Figur 3 sind gewisse Teile entfernt, damit das Innenleben besser ersichtlich ist. **Figur 4** zeigt Detail A aus Figur 3 in einer vergrösserten Darstellung.

Die Spritzgiessvorrichtung 1 weist eine erste und eine zweite Formhälfte 2, 3 auf die an einer ersten, hier feststehenden Formaufspannplatte 5 und einer zweiten entlang von Holmen 6 linear verfahrbaren zweiten Formaufspannplatte 7 angebracht sind. Die erste und die zweite Formhälfte 2, 3 weisen in den gegenüberliegenden Seitenflächen 8, 9 erste und zweite Kavitätenhälften 11, 12 auf. Normalerweise bilden die Formaufspannplatten 5, 7 und die Holmen 6 Bestandteile einer Spritzgiessmaschine (nicht näher dargestellt). Zwischen der ersten und der zweiten Formhälfte 2, 3 ist eine um eine Drehachse 19 drehbar angeordnete mittlere Formhälfte 4 zu erkennen. Die mittlere Formhälfte 4 ist in der gezeigten Ausführungsform quaderförmig ausgestaltet und weist hier vier, je paarweise parallele Seitenflächen 10 auf, in denen dritte Kavitätenhälften 14 angeordnet sind. Die Seitenflächen 10, respektive die dritten Kavitätenhälften 14 wirken in einer Schliessstellung der Spritzgiessvorrichtung 1 mit den korrespondierenden ersten und zweiten Kavitätenhälften 11, 12 in den gegenüberliegenden Seitenflächen 8, 9 der ersten und der zweiten Formhälfte 2, 3 zur Bildung eines Kunststoffteils zusammen.

Die mittlere Formhälfte 4 ist in der gezeigten Ausführungsform an einer unteren und einer oberen Traverse 15, 16 gegenüber den Holmen 6 mittels Linerlagern (nicht näher dargestellt) abgestützt gelagert. Ein untere und eine obere Dreheinheit 17, 18 ermöglicht es, dass die mittlere Formhälfte 4 endlos um die Drehachse 19 gedreht werden kann.

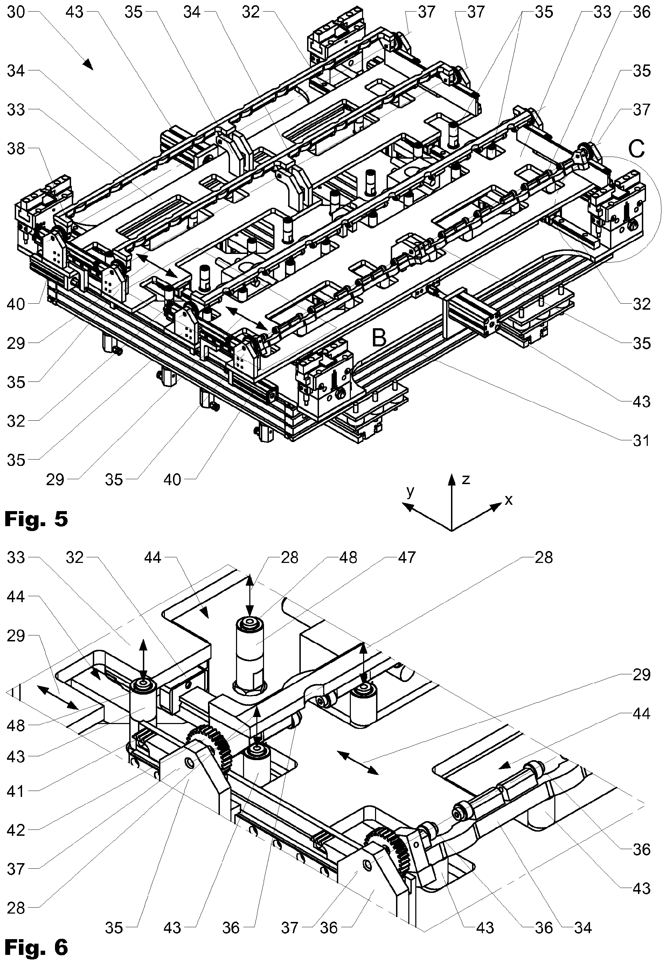

Seitlich an den Traversen 17, 18 ist ein Halterahmen 20 angebracht, der in der gezeigten Ausführungsform zur Aufnahme einer dritten Formhälfte 21 dient. Alternativ oder in Ergänzung können auch andere Bearbeitungsvorrichtung vorgesehen werden. Beispielsweise kann eine Spritzgiessvorrichtung zur Herstellung von Kunststoffverschlüssen mit einer Verdeckelungsvorrichtung ausgestattet werden. Ein Beispiel einer erfindungsgemässen Verdeckelungsvorrichtung wird anhand der **Figuren 5** bis **8** näher beschrieben.

In der gezeigten Ausführungsform ist der Halterahmen 20 mit den Traversen 17, 18 wirkverbunden und bewegt sich beim Öffnen und Schliessen der Spritzgiessvorrichtung mit diesen entlang der Holmen 6 mit. Die dritte Formhälfte 21 ist über Aktuatoren 22 (vgl. **Figur 4**) mit einer Gegendruckplatte 23 wirkverbunden. Die Gegendruckplatte 23 und die dritte Formhälfte 21 sind mittels einer Verschiebeeinheit 24, die am Halterahmen 20 befestigt ist und in der gezeigten Ausführungsform zwei Teleskopstangen 27 aufweist, in seitlicher, radialer Richtung (y-Richtung, Pfeil 13 vgl. **Figur 4**) gegenüber der mittleren Formhälfte 4 verschiebbar. An der Gegendruckplatte 23 sind Klemmzangen 25 angebracht, die in Produktionsstellung mit im Bereich der Seitenflächen 10 der mittleren Formhälfte 4 angeordneten Verankerungselementen 26 in Eingriff stehen und eine formschlüssige Verbindung zwischen der Gegendruckplatte 23 und der temporär zugeordnete Seitenfläche 10 erzeugen. Mittels eines zwischen der Gegendruckplatte 23 und der dritten Formhälfte 21 angeordneten Aktuator 22, z.B. in Form eines Hydraulikzylinders, wird die dritte Formhälfte 21 mittels einer definierten Schliesskraft gegen die temporär zugeordnete Seitenfläche 10 gepresst. Anschliessend wird in, durch die dritte und die mittlere Formhälfte gebildete, Kavitäten plastifiziertes Material zur Bildung von Teilen oder Komponenten davon eingespritzt. Andere Bearbeitungsformen wie Heissprägen, Bedrucken, Schweissen, In-Mold-Labeling sind bei Bedarf alternativ oder in Ergänzung möglich.

Die während einem Verarbeitungsschritt durch die Klemmzangen 25 und die Verankerungselemente 26 gebildete Wirkverbindung zwischen der Gegendruckplatte 23 und der dritten Werkzeughälfte 21 verschont die Dreheinheiten und deren Lager von übermässiger Beanspruchung. Insbesondere bei der koaxialen Durchführung von Medien durch die Dreheinheiten von und zur mittleren Formhälfte ist eine ausgeglichene Verteilung der Kräfte notwendig um Undichtigkeiten zu vermeiden. Alternativ oder in Ergänzung können die Kräfte auch durch die Traversen 15, 16 auf die gegenüberliegenden Seite des drehbaren Mitteilteils geleitet werden. In diesem Fall ist auf der gegenüberliegende Seite ebenfalls ein Aktuator und eine Gegendruckplatte vorgesehen, mittels der eine kompensierende Kraft auf die gegenüberliegende Seite der mittleren Formhälfte ausgeübt werden kann. Bei Bedarf kann auf der gegenüberliegenden Seite auch eine vierte Formhälfte vorgesehen werden, die zur Herstellung einer weiteren Materialkomponente oder Teile ermöglicht.

Um unkontrollierte Kräfteverteilungen zu vermeiden ist die Verschiebeeinheit 24 derart ausgestaltet, dass sie durch die Aktuatoren 22 bewirkte belastungsbedingte Deformationen bei Bedarf auszugleichen vermag. Dies kann z.B. dadurch erreicht werden, dass eine elastische Lagerung oder ein ausgleichender Federspeicher vorgesehen sind. Bei Bedarf sind weitere Zentrierungsmittel vorgesehen, die über die Verankerungselemente 26, respektive die Klemmzangen 25 vorstehen und eine Zentrierung der in Eingriff zu bringenden Elemente der mittleren und der dritten Formhälfte (resp. der Bearbeitungsvorrichtung) vor dem Einkuppeln der Klemmzangen 25 mit den Verankerungselementen bewirken.

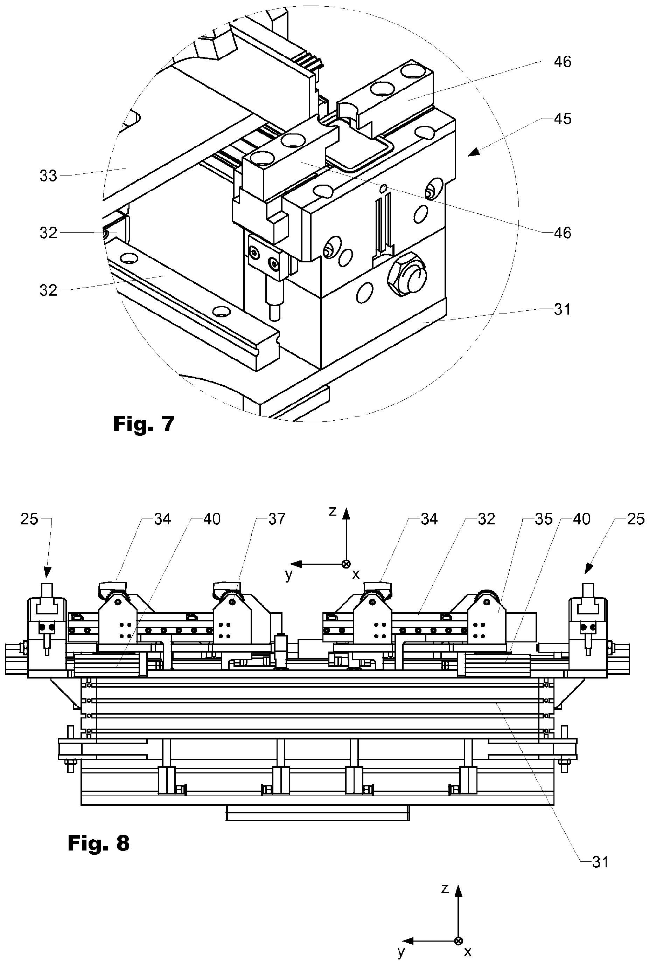

**Figur 5** zeigt eine erfindungsgemässe Verdeckelungsvorrichtung 30, die sich für eine Verwendung als zusätzliche Bearbeitungsvorrichtung in einer Spritzgiessvorrichtung 1 gemäss den Figuren 1 bis 4 eignet. Figur 5 zeigt die Verdeckelungsvorrichtung 30 in einer perspektivischen Ansicht von schräg oben. **Figur 6** zeigt **Detail B** aus Figur 5 in einer vergrösserten Darstellung. **Figur 7** zeigt **Detail C** aus Figur 5. **Figur 8** zeigt die Verdeckelungsvorrichtung 30 von unten, **Figur 9** von vorne und **Figur 10** von oben.

Die gezeigte Ausführungsform der Verdeckelungsvorrichtung 30 weist eine hier rahmenförmige erste Grundplatte 31 auf, an der zwei zweite Grundplatten 33 angeordnet sind. Die zweiten Grundplatten 33 sind mittels Linearlagern 32 relativ und parallel zur ersten Grundplatte 31 in lokaler y-Richtung durch wirkverbundene Linearantriebe 43, hier in Form von Pneumatikzylindern linear verschiebbar (vgl. Pfeil 29). Die zweiten Grundplatten 33 dienen wiederum zur Halterung und Positionierung von hier vier um zweite Drehachsen 37 (parallel zur lokalen x-Richtung) drehbare Schliessbügel 34. Die Schliessbügel 34 sind je über drei (zwei äusseren und eine mittlere) Drehlagereinheiten 35 mit den zweiten Grundplatten 33 wirkverbunden. Die Schliessbügel 34 sind in etwa E-förmig ausgestaltet und weisen im Bereich ihrer Basis (zwischen den Endschenkeln) Druckrollen 36 auf. Wie zu erkennen ist, sind die Schliessbügel 34 gegenüber ihren zweiten Drehachsen 37 mittels Distanzmitteln 38 exzentrisch angeordnet. Die Schliessbügel 34 werden durch Drehantriebsmittel 39 um die zweite Drehachse 37 drehbar angetrieben, hier bestehend aus Pneumatikzylindern 40, die über Zahnstangen 41 mit den Schliessbügeln 34 gekoppelte Ritzel 42.

Auf der ersten Grundplatte 31 sind in vertikaler Richtung (z-Richtung, vgl. Pfeil 28) verschiebbare Druckstössel 43 angeordnet, die gleichzeitig als Sauggreifer dienen. Die zweiten Grundplatten 33 weisen Aussparungen 44 auf, damit sie nicht mit den Druckstösseln 43 kollidieren.

An vier Ecken der ersten Grundplatte 31 sind Klemmzangen 25 angeordnet, mittels denen die Verdeckelungsvorrichtung an entsprechenden Verankerungselementen 26 (vgl. hierzu Figuren 1 bis 4) einer Seitenfläche 10 eines drehbaren Mittelteils (mittlere Formhälfte) 4 angekoppelt werden kann. Eine Vergrösserung einer Klemmzangen 25 ist in **Figur 7** zu erkennen. An einem Grundkörper 45 sind vorstehend zwei seitlich verschiebbare Spannbacken 46 angeordnet, mittels denen ein in etwa pilzförmiges Verankerungselement 26 (vgl. Figuren 1 bis 4) im Bereich der mittleren Formhälfte 4 in Produktionsstellung temporär umschlossen werden kann.

Nachfolgende Erläuterungen werden mit Bezugnahme auf die **Figuren 1** bis **8** vorgenommen. Es wird dabei davon ausgegangen, dass an Stelle der in den **Figuren 1** bis **4** gezeigten dritten Formhälfte 21 eine Verdeckelungsvorrichtung 30 gemäss den **Figuren 5** bis **8** an einem Halterahmen 20 angeordnet ist. Sobald die Verdeckelungsvorrichtung 30 gegenüber einer Seitenfläche 10 der mittleren Formhälfte 4 in Position gebracht und bei Bedarf wirkverbunden worden ist, werden die Schliessbügel 34 mittels der zweiten Grundplatten 33 unter, vorgängig durch eine Funktion der mittleren Formhälfte 4 aus den Kavitäten der Seitenflächen 10 freigestellten aus einem Verschlussober-, einem Verschlussunterteil und en diese funktional verbindendes Scharnier bestehenden Scharnierverschlüsse (nicht dargestellt) geschoben und mittels den Schliessbügeln durch Rotation derselben um die zweite Drehachse 37 zumindest teilweise geschlossen. Anschliessend werden die auf die Verschlussunterteile ausgerichteten Druckstössel kontrolliert nach vorne gefahren um die Verschlussoberteile gegen die Verschlussunterteile gepresst und diese damit gänzlich verschlossen. Die Druckstössel 43 weisen an ihrem vorderen Ende einen von einer starren Hülse 47 umgebenen Saugnapf 48 auf mittels dem die geschlossenen Verschlüsse durch die Verdeckelungsvorrichtung entnommen werden können. Bei Bedarf kann die Verdeckelungsvorrichtung um weitere Achsen dreh- und verschiebbar angeordnet sein, damit die Verschlüsse kontrolliert abgelegt oder flexibel an eine andere Fördervorrichtung übergeben werden können. Bei Bedarf kann eine Vakuumvorrichtung, resp. Dichtigkeitsmessvorrichtung integriert sein, mittels derer die Verschlüsse bei der Entnahme oder davor auf ihre Dichtigkeit geprüft werden können.

### LISTE DER BEZUGSZEICHEN

- 1: Spritzgiessvorrichtung
- 2: Erste Formhälfte
- 3: Zweite Formhälfte
- 4: Mittlere Formhälfte
- 5: Erste Formaufspannplatte
- 6: Holmen
- 7: Zweite Formaufspannplatte
- 8: Erste Seitenfläche
- 9: Zweite Seitefläche
- 10: Seitenflächen Mittelteil
- 11: Erste Kavitätenhälften
- 12: Zweite Kavitätenhälften
- 13: Bewegung dritte Formhälfte (Pfeil)
- 14: Dritte Kavitätenhälften
- 15: Untere Traverse
- 16: Obere Traverse
- 17: Untere Dreheinheit
- 18: Obere Dreheinheit
- 19: Drehachse
- 20: Halterahmen
- 21: Dritte Formhälfte
- 22: Aktuator
- 23: Gegendruckplatte
- 24: Verschiebeeinheit
- 25: Klemmzange
- 26: Verankerungselement
- 27: Teleskopstangen
- 28: Pfeil z-Richtung
- 29: Pfeil y-Richtung
- 30: Verdeckelungsvorrichtung
- 31: Erste Grundplatte
- 32: Linearlager
- 33: Zweite Grundplatte
- 34: Schliessbügel
- 35: Drehlagereinheit
- 36: Druckrollen
- 37: Zweite Drehachsen
- 38: Distanzmittel
- 39: Drehantriebsmittel
- 40: Pneumatikzylinder
- 41: Linearantrieb
- 42: Ritzel
- 43: Druckstössel
- 44: Aussparung
- 45: Grundkörper
- 46: Spannbacken
- 47: Hülse
- 48: Saugnapf

## Patentansprüche

1. Spritzgiessvorrichtung (1) mit
a. einer ersten Formhälfte (2) und einer gegenüber dieser in einer ersten Richtung (x) entlang von Holmen (6) einer Spritzgiessmaschine verschiebbaren zweiten Formhälfte (3) und mindestens einer zwischen der ersten und der zweiten Formhälfte (2, 3) angeordneten, um eine Drehachse (18) drehbaren und in der ersten Richtung (x) verschiebbaren mittleren Formhälfte (4), sowie
b. einer entlang der Holmen (6) in der ersten Richtung (x) verschiebbaren Haltevorrichtung (15, 16) zur drehbaren Lagerung der mittleren Formhälfte (4) um die Drehachse (18);
c. mindestens einer seitlich der Spritzgiessvorrichtung (1) angeordneten weiteren Bearbeitungsvorrichtung (21), die in einer Schliessstellung der Spritzgiessvorrichtung (1) auf der Höhe der mittleren Formhälfte (4) angeordnet und mit einer temporär zugeordneten Seitenfläche (10) der mittleren Formhälfte (4) wirkverbindbar ist,
**dadurch gekennzeichnet, dass**
a. die Haltevorrichtung (15, 16) zur Halterung der mittleren Formhälfte (4) eine untere und/oder eine obere Traverse (15, 16) umfasst, und
b. ein Halterahmen (20) zur Halterung der weiteren Bearbeitungsvorrichtung (21) an zumindest einer Traverse der Haltevorrichtung (15, 16) für die mittlere Formhälfte (4) angebracht ist und die weitere Bearbeitungsvorrichtung (21) am Halterahmen (20) in mindestens einer Richtung beweglich angeordnet ist.

2. Spritzgiessvorrichtung (1) gemäss einem der vorangehenden Patentansprüche, **dadurch gekennzeichnet, dass** die Haltevorrichtung (15, 16) für die mittlere Formhälfte (4) einen zwischen den unteren Holmen (6) der Spritzgiessmaschine angeordneten, auf einem Schienensystem in Richtung (x) der Holme (6) beweglichen Wagen umfasst, an dem der Halterahmen (20) für die weitere Bearbeitungsvorrichtung (21) seitlich vorstehend befestigt ist.

3. Spritzgiessvorrichtung (1) gemäss einem der vorangehenden Patentansprüche, **dadurch gekennzeichnet, dass** die weitere Bearbeitungsvorrichtung (21) gegenüber der mittleren Formhälfte (4) in radialer und/oder tangentialer Richtung beweglich angeordnet ist.

4. Spritzgiessvorrichtung (1) gemäss einem der vorangehenden Patentansprüche, **dadurch gekennzeichnet, dass** die weitere Bearbeitungsvorrichtung (21) in einer Produktionsstellung über mit korrespondierenden Verankerungselementen (26) in Eingriff bringbaren Klemmzangen (25) mit der mittleren Formhälfte (4) temporär wirkverbunden ist.

5. Spritzgiessvorrichtung (1) gemäss Patentanspruch 4, **dadurch gekennzeichnet, dass** die Verankerungselemente (26) im Bereich der Seitenflächen (10) einer mittleren Formhälfte (4) angeordnet sind.

6. Spritzgiessvorrichtung (1) gemäss einem der vorangehenden Patentansprüche, **dadurch gekennzeichnet, dass** die weitere Bearbeitungsvorrichtung (21) eine Gegendruckplatte (23) aufweist, die in einer Produktionsstellung mittels Klemmzangen (25) gegenüber der mittleren Formhälfte (4) abgestützt ist.

7. Spritzgiessvorrichtung (1) gemäss Patentanspruch 6, **dadurch gekennzeichnet, dass** die Gegendruckplatte (23) über eine Verschiebeeinheit (24) am Halterahmen (20) befestigt ist.

8. Spritzgiessvorrichtung (1) gemäss Patentanspruch 6, **dadurch gekennzeichnet, dass** eine Gegendruckplatte und ein Aktuator auf der gegenüberliegenden Seite des drehbaren Mittelteils angeordnet sind und zur Kompensation der Kräfte auf den drehbaren Mittelteil dient.

9. Spritzgiessvorrichtung (1) gemäss einem der vorangehenden Patentansprüche, **dadurch gekennzeichnet, dass** die weitere Bearbeitungsvorrichtung (21) eine dritte Formhälfte (21) oder eine Verdeckelungsvorrichtung (30) ist.

10. Spritzgiessvorrichtung (1) gemäss einem der vorangehenden Patentansprüche, **dadurch gekennzeichnet, dass** die weitere Bearbeitungsvorrichtung (21) zum Einlegen, Einsetzen oder Verankern von weiteren Teilen in eine oder mehrere Kavitäten und/oder Spritgiessteile, die in einem vorangegangenen Bearbeitungsschritt hergestellt wurden dient.

11. Verfahren zum Andocken einer weiteren Bearbeitungsvorrichtung (21) an einer Spritzgiessvorrichtung (1) gemäss einem der vorangehenden Patentansprüche mit folgenden Verfahrensschritten:
a. Nachdem die mittlere Formhälfte (4) eine vorgesehene Drehposition erreicht hat, wird die weitere Bearbeitungsvorrichtung (21) radial auf eine frei liegende Seitenfläche der mittleren Formhälfte (4) zu bewegt und an dieser angekoppelt;
b. Bei Bedarf werden Zentriermittel miteinander in Eingriff gebracht und/oder Verankerungselemente kraftschlüssig miteinander verankert, derart, dass die weitere Bearbeitungsvorrichtung (21) gegenüber der Seitenfläche exakt positioniert und/oder kraftschlüssig verankert ist;
c. Bei Bedarf Freistellen der sich im Bereich der Seitenfläche der mittleren Formhälfte befindlichen Teile oder Zwischenprodukte relativ zur Seitenfläche ;
d. Durchführen eines Bearbeitungsschrittes mittels der weiteren Bearbeitungsvorrichtung (21);
e. Entkoppeln der weiteren Bearbeitungsvorrichtung (21) von der mittleren Formhälfte (4) während dem die mittlere Formhälfte (4) stillsteht oder die Spritzgiessvorrichtung geöffnet wird.

## Claims

1. An injection molding device (1) with
a. a first mold half (2) and a second mold half (3), which is displaceable relative to the first mold half in a first direction (x) along rails (6) of an injection molding machine, and with at least one central mold half (4), which is arranged between the first and the second mold halves (2, 3), and which is rotatable about a rotational axis (18) and is displaceable in the first direction (x) ;
b. a holding device (15, 16), which is displaceable along the rails (6) in the first direction (x) and serves to rotatably mount the central mold half (4) about the rotational axis (18); and
c. at least one additional processing device (21) arranged laterally of the injection molding device (1), wherein said additional processing device is arranged at the level of the central mold half (4) in a closed position of the injection molding device (1) and can be interconnected to a temporarily assigned lateral face (10) of the central mold half (4),
**characterized in that**
a. the holding device (15, 16) for holding the central mold half (4) comprises a lower and/or an upper crosshead (15, 16), and **in that**
b. a holding frame (20) for holding the additional processing device (21) is arranged on at least one crosshead of the holding device (15, 16) for the central mold half (4) and the additional processing device (21) is arranged on the holding frame (20) such that it is movable in at least one direction.

2. The injection molding device (1) according to one of the preceding claims, **characterized in that** the holding device (15, 16) for the central mold half (4) comprises a carriage, which is arranged between the lower rails (6) of the injection molding machine and which is movable in the direction (x) of the rails (6) on a track system, wherein the holding frame (20) for the additional processing device (21) is mounted on said carriage in a laterally protruding manner.

3. The injection molding device (1) according to one of the preceding claims, **characterized in that** the additional processing device (21) is arranged such that it is movable relative to the central mold half (4) in the radial and/or tangential direction.

4. The injection molding device (1) according to one of the preceding claims, **characterized in that** the additional processing device (21) temporarily is interconnected to the central mold half (4) in a production position by means of clamping tongs (25), which can be engaged with corresponding anchoring elements (26).

5. The injection molding device (1) according to claim 4, **characterized in that** the anchoring elements (26) are arranged in the region of the lateral faces (10) of a central mold half (4).

6. The injection molding device (1) according to one of the preceding claims, **characterized in that** the additional processing device (21) comprises a counterpressure plate (23), which is supported relative to the central mold half (4) in a production position by means of clamping tongs (25).

7. The injection molding device (1) according to claim 6, **characterized in that** the counterpressure plate (23) is fixed to the holding frame (20) by means of a displacement unit (24).

8. The injection molding device (1) according to claim 6, **characterized in that** a counterpressure plate and an actuator are arranged on the opposite side of the rotatable central part and serve to compensate the forces exerted upon the rotatable central part.

9. The injection molding device (1) according to one of the preceding claims, **characterized in that** the additional processing device (21) is a third mold half (21) or a capping device (30).

10. The injection molding device (1) according to one of the preceding claims, **characterized in that** the additional processing device (21) serves to place, insert or anchor additional parts in one or more cavities and/or injection molded parts, which were produced in a preceding processing step.

11. A method for docking an additional processing device (21) to an injection molding device (1) according to one of the preceding claims, comprising the steps of:
a. after the central mold half (4) has reached a predefined rotating position, the additional processing device (21) is radially moved toward an exposed lateral face of the central mold half (4) and coupled thereto;
b. if necessary, centering means are engaged with one another and/or anchoring elements are anchored to one another in a force-fit in such a way that the additional processing device (21) is exactly positioned and/or anchored in a force-fit relative to the lateral face;
c. if necessary, freeing up the parts or intermediate products located in the region of the lateral face of the central mold half relative to the lateral face;
d. carrying out a processing step by means of the additional processing device (21); and
e. decoupling the additional processing device (21) from the central mold half (4) while the central mold half (4) is still or the injection molding device is opened.

## Revendications

1. Dispositif de moulage par injection (1) comportant
a. une première demi-moule (2) et une seconde demi-moule (3) déplaçable par rapport à celle-ci dans un premier sens (x) le long de longerons (6) d'une machine de moulage par injection et au moins une demi-moule centrale (4) disposée entre la première et la seconde demi-moule (2, 3), pouvant tourner autour d'un axe de rotation (18) et déplaçable dans le premier sens (x), et
b. un dispositif de retenue (15, 16) déplaçable le long des longerons (6) dans le premier sens (x) pour l'appui rotatif de la demi-moule centrale (4) autour de l'axe de rotation (18) ;
c. au moins un autre dispositif d'usinage (21) disposé sur le côté du dispositif de moulage par injection (1) et qui est disposé, dans une position de fermeture du dispositif de moulage par injection (1), au niveau de la demi-moule centrale (4) et est interconnectable avec une surface latérale temporairement associée (10) de la demi-moule centrale (4),
**caractérisé en ce**
a. **que** le dispositif de retenue (15, 16) comprend une traverse inférieure et/ou une traverse supérieure (15, 16) pour la retenue de la demi-moule centrale (4),
b. **qu'**un cadre de retenue (20) pour le maintien de l'autre dispositif d'usinage (21) est attaché à au moins une traverse du dispositif de retenue (15, 16) pour la demi-moule centrale (4) et que l'autre dispositif d'usinage (21) est disposé de manière mobile sur le cadre de retenue (20) dans au moins une direction.

2. Dispositif de moulage par injection (1) selon une des revendications précédentes, **caractérisé en ce que** le dispositif de retenue (15, 16) pour la demi-moule centrale (4) comprend un chariot disposé entre les longerons inférieurs (6) de la machine de moulage par injection et qui est mobile sur un système de rails en direction (x) des longerons (6) et auquel le cadre de retenue (20) pour l'autre dispositif d'usinage (21) est fixé en saillie latérale.

3. Dispositif de moulage par injection (1) selon une des revendications précédentes, **caractérisé en ce que** l'autre dispositif d'usinage (21) est disposé de manière mobile par rapport à la demi-moule centrale (4) en direction radiale et/ou tangentielle.

4. Dispositif de moulage par injection (1) selon une des revendications précédentes, **caractérisé en ce que** l'autre dispositif d'usinage (21), en position de production, est temporairement interconnecté avec la demi-moule centrale (4) par l'intermédiaire de pinces de serrage (25) pouvant être amenées en engrènement avec des éléments d'ancrage correspondants (26).

5. Dispositif de moulage par injection (1) selon la revendication 4, **caractérisé en ce que** les éléments d'ancrage (26) sont disposés dans la zone des surfaces latérales (10) d'une demi-moule centrale (4).

6. Dispositif de moulage par injection (1) selon une des revendications précédentes, **caractérisé en ce que** l'autre dispositif d'usinage (21) comporte une plaque de contre-pression (23) qui, dans une position de production, est soutenue au moyen de pinces de serrage (25) en face de la demi-moule centrale (4).

7. Dispositif de moulage par injection (1) selon la revendication 6, **caractérisé en ce que** la plaque de contre-pression (23) est fixée par une unité de déplacement (24) au cadre de retenue (20).

8. Dispositif de moulage par injection (1) selon la revendication 6, **caractérisé en ce qu'**une plaque de contre-pression et un actionneur sont disposé sur la face opposée de la pièce centrale rotative et servent à compenser les forces sur la pièce centrale rotative.

9. Dispositif de moulage par injection (1) selon une des revendications précédentes, **caractérisé en ce que** l'autre dispositif d'usinage (21) est une troisième demi-moule (21) ou un dispositif de couvercle (30).

10. Dispositif de moulage par injection (1) selon une des revendications précédentes, **caractérisé en ce que** l'autre dispositif d'usinage (21) sert à insérer, à introduire ou à ancrer d'autres pièces dans une ou plusieurs cavités et/ou pièces moulées par injection qui ont été fabriquées pendant une étape d'usinage précédente.

11. Procédé de couplage d'un autre dispositif d'usinage (21) à un dispositif de moulage par injection (1) selon une des revendications précédentes, comprenant les étapes de procédé suivantes :
a. après que la demi-moule centrale (4) a atteint une position de rotation prévue, l'autre dispositif d'usinage (21) est déplacé radialement sur une surface latérale dégagée de la demi-moule centrale (4) et il est couplé à celle-ci ;
b. au besoin, des moyens de centrage sont amenés en engrènement mutuel et/ou des éléments d'ancrage sont ancrés l'un à l'autre en liaison mécanique de manière à ce que l'autre dispositif d'usinage (21) soit positionné précisément par rapport à la surface latérale et/ou ancré en liaison mécanique ;
c. au besoin, par rapport à la surface latérale, dégagement des pièces ou des produits intermédiaires qui se trouvent dans la zone de la surface latérale de la demi-moule centrale ;
d. réalisation d'une étape d'usinage au moyen de l'autre dispositif d'usinage (21) ;
e. découpler de l'autre dispositif d'usinage (21) de la demi-moule centrale (4) pendant que la moule centrale (4) est immobile ou le dispositif de moulage par injection est ouvert.
